# EUROPÄISCHE PATENTSCHRIFT

(11) **EP 2 398 684 B1**
(45) Veröffentlichungstag und Bekanntmachung des Hinweises auf die Patenterteilung: **12.06.2013**
(21) Anmeldenummer: 10706517.9
(22) Anmeldetag: 18.02.2010
(51) Int. Cl.: B60T 8/32, B60T 8/34, B60T 13/68

(54) **ELEKTRO-PNEUMATISCHES DRUCKREGELMODUL MIT PNEUMATISCH KREISGETRENNTEN DRUCKREGELKANÄLEN**
ELECTROPNEUMATIC PRESSURE CONTROL MODULE COMPRISING PNEUMATICALLY CIRCUIT-WISE SEPARATED PRESSURE CONTROL CHANNELS
MODULE DE RÉGULATION DE PRESSION ÉLECTRO-PNEUMATIQUE AVEC CANAUX DE RÉGULATION DE PRESSION SUR CIRCUITS PNEUMATIQUES SÉPARÉS

(30) Priorität: 20.02.2009 DE 102009009811
(43) Veröffentlichungstag der Anmeldung: 28.12.2011
(73) Patentinhaber: KNORR-BREMSE Systeme für Nutzfahrzeuge GmbH, 80809 München (DE)
(72) Erfinder: STEINBERGER, Jürgen, 82194 Gröbenzell (DE); FRANK, Péter, H-1112 Budapest (HU); HERGES, Michael, 80935 München (DE); MEDERER, Martin, 92318 Neumarkt (DE)
(74) Vertreter: Schönmann, Kurt
(86) Internationale Anmeldenummer: PCT/EP2010/001019
(87) Internationale Veröffentlichungsnummer: WO 2010/094481

(56) Entgegenhaltungen:
- EP-A2- 1 275 570
- WO-A2-2006/103636
- DE-A1-102007 021 646
- DE-A1-102007 037 346
- DE-C1- 10 149 918
- GB-A- 2 448 007
- WREDE J ET AL: "BRAKE BY WIRE FOR COMMERCIAL VEHICLES" SAE TRANSACTIONS, SOCIETY OF AUTOMOTIVE ENGINEERS, INC., WARRENDALE, PA, US, Bd. 101, Nr. 922489, 1. Januar 1992 (1992-01-01), Seiten 849-859, XP000473008 ISSN: 0096-736X

## Beschreibung

Die Erfindung geht aus von einer elektro-pneumatischen Bremsanlage eines Fahrzeugs beinhaltend wenigstens ein als Baueinheit ausgeführtes elektro-pneumatisches Druckregelmodul, mit wenigstens zwei getrennt regelbaren Druckregelkanälen, wobei für jeden Druckregelkanal auf der Basis einer von wenigstens einem Druckluftvorrat stammenden Arbeitsluft abhängig von Bremsanforderungssignalen eines Bremswertgebers ein geregelter, an wenigstens einem Arbeitsanschluss anstehender Arbeitsdruck für wenigstens einen Betriebsbremszylinder der Bremsanlage erzeugt wird, gemäß dem Oberbegriff von Anspruch 1.

Ein gattungsgemäßes Druckregelmodul ist aus der EP 1 122 142 A1 bekannt. Das bekannte Druckregelmodul ist ein 2-kanaliges Druckregelmodul als Hinterachsmodul, wobei je ein Kanal eine Radbremse der Hinterachse mit Brems- oder Arbeitsdruck versorgt. Die Radbremszylinder der Vorderachse werden demgegenüber von je einem 1-Kanal-Druckregelmodul be- bzw. entlüftet, welcher von einem Vorderachs-Druckluftvorrat versorgt wird. Diese 1-Kanal-Druckregelmoduln weisen zudem jeweils einen rein pneumatischen Back-up-Kreis auf, um bei Ausfall der Elektrik noch durch den von einem Fußbremsventil ausgesteuerten Druck bremsen zu können. Die beiden 1-Kanal-Druckregelmoduln der Vorderachse und das 2-Kanal-Druckregelmodul der Hinterachse werden von einer außerhalb der Druckregelmodule angeordneten elektronischen Steuereinrichtung angesteuert.

Bei einem teilweisen pneumatischen Ausfall des Vorderachsbremskreises schaltet ein Umschaltventil eine Notstellung, in der zumindest eines der beiden 1-Kanal-Druckregelmodule der Vorderachse von einem gegenüber dem Vorderachs-Druckluftvorrat zusätzlichen Druckluftvorrat versorgt wird. Nachteilig ist hierbei jedoch, dass zur Erhöhung der Ausfallsicherheit ein zusätzlicher Druckluftvorrat benötigt wird.

Weiterhin wird das 2-Kanal-Druckregelmodul der Hinterachse von einem einzigen Druckluftvorrat mit Druckluft versorgt. Nachteilig hierbei ist, dass bei einem Ausfall dieses Druckluftvorrats oder bei einem Riss in der das 2-Kanal-Druckregelmodul versorgenden Vorratsluftleitung beide Druckkanäle ausfallen.

In der WO 2006/103636 A2 wird eine Bremsanlage einer Straßenbahn beschrieben, mit einer gemeinsamen elektro-pneumatischen Steuerungseinheit für mehrere pneumatische Steuerkreise und den Steuerkreisen jeweils zugeordnete separate Betriebsbrems-, Notbrems- und Parkbremsaktuatoren. Dabei ist für jeden Steuerkreis ein eigener Druckluftvorrat vorgesehen.

Der vorliegenden Erfindung liegt daher die Aufgabe zugrunde, eine Bremsanlage der eingangs erwähnten Art derart fortzubilden, dass die Betriebsbremsen bei geringem Aufwand eine höhere Ausfallsicherheit aufweisen.

Diese Aufgabe wird erfindungsgemäß durch die Merkmale von Anspruch 1 gelöst.

### Offenbarung der Erfindung

Die Erfindung basiert auf dem Gedanken, dass
a) zur Ausbildung von pneumatisch kreisgetrennten Druckregelkanälen jedem Druckregelkanal wenigstens ein eigener, an einen eigenen Druckluftvorrat anschließbarer Vorratsdruckanschluss zugeordnet ist, wobei
b) die pneumatischen Strömungswege eines jeden Druckregelkanals zumindest ausgehend von dem jeweiligen Vorratsdruckanschluss bis zu dem jeweiligen Arbeitsdruckanschluss von den pneumatischen Strömungswegen eines jeweils anderen Druckregelkanals pneumatisch getrennt ausgebildet sind.

In diesem Fall sind daher pneumatisch vollständig kreisgetrennte Druckregelkanäle ausgehend von dem jeweiligen Druckluftvorrat bis zu den zugeordneten Betriebsbremszylindern mit jeweils eigener Vorratsluftversorgung vorhanden, so dass der Ausfall der einem Druckregelkanal zugeordneten Vorratsluft nicht zu einem Funktionsausfall des gesamten Druckregelmoduls führen kann, da die weiteren Druckregelkanäle aufgrund ihrer getrennten Versorgung mit Vorratsluft weiterhin funktionsfähig bleiben. Nicht zuletzt ist außer den ohnehin den Druckregelkanälen zugeordneten Druckluftvorräten kein zusätzlicher Druckluftvorrat notwendig.

Dies ist insbesondere dann von Vorteil, wenn ein erfindungsgemäßes Druckregelmodul zwei pneumatisch getrennte Druckregelkanäle aufweist, von welchen ein Druckregelkanal einer Achse, beispielsweise einer Vorderachse und ein Druckregelkanal einer weiteren Achse, beispielsweise Hinterachse zugeordnet ist. Solche zweiachsigen Fahrzeuge bilden insbesondere im Nutzfahrzeugbereich die große Mehrzahl. Dann kann bei einem Ausfall eines Druckregelkanals und damit der Bremsen einer Achse immer noch an der anderen Achse gebremst werden.

Bevorzugt ist deshalb bei dem Druckregelmodul ein Arbeitsdruckanschluss zum Anschluss wenigstens eines Betriebsbremszylinders einer Achse und wenigstens ein weiterer Arbeitsdruckanschluss zum Anschluss eines Betriebsbremszylinders wenigstens einer weiteren Achse des Fahrzeugs vorgesehen.

Dabei kann beispielsweise ein pneumatisch kreisgetrennter Druckregelkanal wenigstens einer Vorderachse und ein pneumatisch kreisgetrennter Druckregelkanal wenigstens einer Hinterachse oder ein pneumatisch kreisgetrennter Druckregelkanal wenigstens einer Hinterachse und ein pneumatisch kreisgetrennter Druckregelkanal wenigstens einer weiteren Hinterachse zugeordnet sein.

Durch die in den Unteransprüchen aufgeführten Maßnahmen sind vorteilhafte Weiterbildungen und Verbesserungen der in den unabhängigen Ansprüchen angegebenen Erfindung möglich.

Zur Ausbildung einer elektro-pneumatischen Bremsanlage mit vorrangig elektrisch betätigten Druckregelkanälen und nachrangig pneumatischer Rückfallebene bei einem Ausfall der Elektrik ist jedem Druckregelkanal besonders bevorzugt ein eigener Back-up-Kreis zugeordnet, mit eigenem Back-up-Anschluss für die Einsteuerung eines von dem Vorratsdruck des dem jeweiligen Druckregelkreis zugeordneten Druckluftvorrat abgeleiteten und vom Bremswertgeber gebildeten pneumatischen Backup-Drucks, aus welchem bei einem Ausfall von elektrischen Komponenten der Arbeitsdruck an dem Arbeitsanschluss des jeweiligen Druckregelkanals gebildet wird.

Gemäß einer Weiterbildung sind dann die pneumatischen Strömungswege eines jeden Backup-Kreises zumindest ausgehend von dem zugeordneten Back-up-Anschluss bis zu dem zugeordneten Arbeitsdruckanschluss von den pneumatischen Strömungswegen eines jeweils anderen Back-up-Kreises pneumatisch getrennt ausgebildet. Dies resultiert in vorteilhafter Weise zu einer weiteren Erhöhung der Funktionssicherheit der elektro-pneumatischen Bremsanlage, als dann auch die Back-up-Kreise pneumatisch vollständig voneinander getrennt sind und daher Leckagen in einem Back-up-Kreis nicht zu einem Ausfall in einem anderen Back-up-Kreis führen.

Alternativ könnte bei Fahrzeugen, bei denen das Fußbremsventil lediglich einen pneumatischen Kanal aufweist und welche mit dem erfindungsgemäßen Druckregelmodul ausgerüstet werden sollen, der Druckregelmodul nur einen einzigen Back-up-Anschluss für die Einsteuerung eines vom Bremswertgeber erzeugten pneumatischen Backup-Drucks aufweisen, aus welchem bei einem Ausfall von elektrischen Komponenten mit Hilfe von integrierten Kreistrennungsmitteln separate Arbeitsdrücke an den Arbeitsanschlüssen der Druckregelkanäle gebildet werden. Dann sind ebenfalls pneumatisch getrennte, den Kreistrennungsmitteln in Strömungsrichtung nachgeordnete Back-up-Kreise vorhanden, welche die Ausfallsicherheit der Bremsanlage erhöhen.

Bevorzugt beinhaltet das Druckregelmodul folgendes:
a) eine elektronische Steuereinrichtung, welche sämtliche für die Druckregelung durch die Druckregelkanäle notwendigen Routinen durchführt und für jeden Druckregelkanal abhängig von elektrischen Bremsanforderungssignalen des Bremswertgebers ein einem Soll-Arbeitsdruck entsprechendes elektrisches Steuersignal erzeugt,
b) für jeden Druckregelkanal eine eigene elektro-magnetbetätigte Ventileinrichtung, welche abhängig von den elektrischen Steuersignalen der elektronischen Steuereinrichtung aus dem Vorratsdruck des zugeordneten Druckluftvorrats einen Ist-Arbeitsdruck für den dem jeweiligen Druckregelkanal zugeordneten Arbeitsanschluss erzeugt,
c) für jeden Druckregelkanal wenigstens einen Drucksensor, welcher abhängig von dem von der zugeordneten elektro-magnetbetätigten Ventileinrichtung ausgesteuerten Ist-Arbeitsdruck ein Signal in die elektronische Steuereinrichtung zum Vergleich mit dem jeweiligen Soll-Arbeitsdruck einsteuert, zur geregelten Be- und Entlüftung des wenigstens einen, an den betreffenden Druckregelkanal angeschlossenen Betriebsbremszylinders.

In vorteilhafter Weise regelt dann die gemeinsame elektronische Steuereinrichtung den Druck in allen Druckregelkanälen, mithin sind sämtliche Steuerungs- und Regelungsroutinen bzw. die gesamte Steuerungselektronik die elektrischen Bremskreise betreffend in der elektronischen Steuereinrichtung des Druckregelmoduls integriert, so dass außerhalb des Druckregelmoduls keine weiteren elektronischen Komponenten mehr notwendig sind. Gegenüber der eingangs genannten EP 1 122 142 A1 mit einer von den Druckregelmodul getrennten elektrischen Steuereinrichtung hat diese Maßnahme den Vorteil, dass alle die elektro-pneumatische Bremse betreffenden Steuer- und Regelkomponenten in einem einzigen Gehäuse untergebracht werden können und somit die aus dem Stand der Technik bekannte Verkabelung (Datenbus) zwischen Steuereinrichtung und den Druckregelmoduln samt Stecker und Befestigungskonsolen entfallen kann. Folglich stellt diese Art der Systemarchitektur eine sehr preiswerte und ausfallsichere Lösung insbesondere für zweiachsige Fahrzeuge dar, weil dann außer dem erfindungsgemäßen Druckregelmodul keine weiteren Druckregelmoduln bzw. Steuergeräte mehr notwendig sind.

Besonders bevorzugt sind bei dem Druckregelmodul daher wenigstens die den Druckregelkanälen zugeordneten elektro-magnetbetätigten Ventileinrichtungen, die Drucksensoren sowie die elektronische Steuereinrichtung in einem gemeinsamen Modulgehäuse untergebracht.

Das Druckregelmodul ist bevorzugt so ausgeführt, dass
a) eine Komponenten der elektronischen Steuereinrichtung tragende Platine, elektrische Außenkontakte zur Verbindung der Platine mit externen Geräten, die Drucksensoren (88, 90), mit der Platine verbundene elektrische Kontakte in oder an einem Gehäuseteil angeordnet sind, während
b) die elektro-magnetbetätigten Ventileinrichtungen, den elektrischen Kontakten des einen Gehäuseteils zugeordnete elektrische Kontakte sowie mit den Arbeitsdruckanschlüssen in Verbindung stehende Druckkanäle in einem weiteren Gehäuseteil angeordnet sind, wobei
c) die beiden Gehäuseteile miteinander lösbar verbunden sind und bei einer Verbindung der beiden Gehäuseteile die einander zugeordneten elektrischen Kontakte elektrisch sowie die Drucksensoren und Mündungen der Druckkanäle pneumatisch miteinander verbunden werden.

Auf diese Weise werden gleichzeitig die notwenigen elektrischen bzw. pneumatischen Verbindungen in dem Arbeitsschritt, bei welchem die beiden Gehäusehälften miteinander verbunden werden, hergestellt, was in einer sehr ökonomischen Verstellung des erfindungsgemäßen Druckregelmoduls resultiert.

Alternativ könnten die Drucksensoren auch in dem Gehäuseteil untergebracht sein, in welchem auch die elektro-magnetbetätigten Ventileinrichtungen angeordnet sind, wobei in diesem Fall die pneumatischen Verbindungen zwischen den Arbeitsanschlüssen und den Drucksensoren bereits in dem betreffenden Gehäuseteil ausgebildet sind. Dann sind allerdings zusätzlich bei der Montage der Gehäuseteile in Verbindung bringbare elektrische Kontakte in beiden Gehäuseteilen vorzusehen, damit die Druckregmoduln über die dann geschlossene elektrische Signalverbindung die den Ist-Arbeitsdruck repräsentierenden Signale an die elektronische Steuereinrichtung einsteuern kann.

Das Druckregelmodul ist bevorzugt an einem Rahmen eines Nutzfahrzeugs, im wesentlichen mittig zwischen den Achsen angeordnet, deren Betriebsbremszylinder an die betreffenden Arbeitsdruckanschlüsse angeschlossen sind, beispielsweise im wesentlichen mittig zwischen der Vorderachse und der Hinterachse. Da das am Fahrzeugrahmen angebrachte Druckregelmodul dann außerhalb einer Fahrerkabine angeordnet und Feuchtigkeit, Spritzwasser und Schmutz ausgesetzt ist, sind bei dem Modulgehäuse entsprechende Dichtungsmaßnahmen vorzusehen.

Bei der elektro-pneumatischen Bremsanlage eines Fahrzeugs beinhaltend wenigstens ein Druckregelmodul nach einem der vorhergehend beschriebenen Ausführungsformen sind daher bevorzugt zwei pneumatisch kreisgetrennte Druckregelkanäle für die Betriebsbremszylinder zweier Achsen vorgesehen, vorzugsweise für eine Vorder- und Hinterachse. In diesem Fall ist das Druckregelmodul ein 2-Kanal-Druckregelmodul mit pneumatisch kreisgetrennten Druckregelkanälen für Vorder- und Hinterachse.

Dabei kann für Betriebsbremszylinder jeder weiteren Achse, beispielsweise einer zweiten Hinterachse oder Liftachse, wenigstens ein weiteres, beispielsweise einkanaliges Druckregelmodul vorgesehen werden, dessen elektronische Steuereinrichtung beispielsweise über einen Datenbus mit der elektronischen Steuereinrichtung des 2-Kanal-Druckregelmoduls kommuniziert.

Nicht zuletzt können den Arbeitsdruckanschlüssen des 2-Kanal-Druckregelmoduls und den Betriebsbremszylindern der Vorderachse bzw. der Hinterachse von der elektronischen Steuereinrichtung des 2-Kanal-Druckregelmoduls gesteuerte ABS-Drucksteuerventile zwischengeordnet sein, welche dann zum Drucksteigern, Druckhalten und Drucksenken im Rahmen der ABS-Funktionen dienen.

Genaueres geht aus der folgenden Beschreibung von Ausführungsbeispielen hervor.

### Zeichnungen

Nachstehend sind Ausführungsbeispiele der Erfindung in der Zeichnung dargestellt und in der nachfolgenden Beschreibung näher erläutert. In der Zeichnung zeigt
- Fig.1: eine schematischen Schaltplan einer elektro-pneumatischen Bremsanlage eines Nutzfahrzeugs mit einem Druckregelmodul gemäß einer bevorzugten Ausführungsform der Erfindung;
- Fig.2: eine schematische Querschnittsansicht des Druckregelmoduls von Fig.1 in Explosionsdarstellung;
- Fig.3A und Fig.3B: stark schematisierte Ansichten von Systemarchitekturen von elektro-pneumatischen Bremsanlagen beinhaltend ein Druckregelmodul gemäß Fig.2.

### Beschreibung der Ausführungsbeispiele

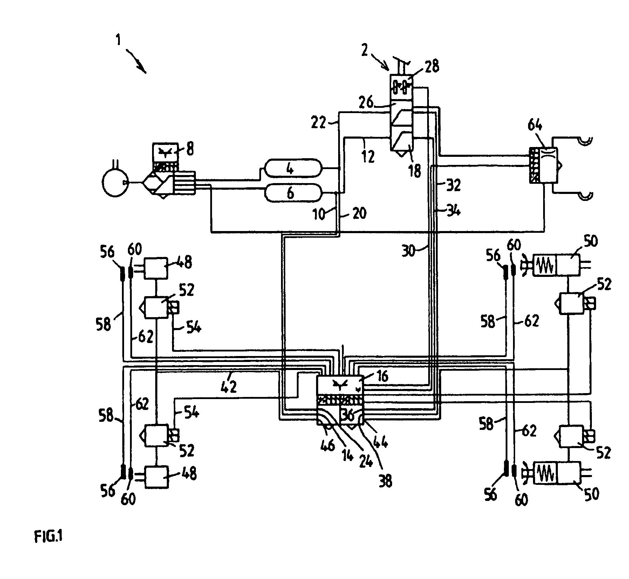

Fig.1 zeigt ein Schaltschema einer elektro-pneumatischen Betriebsbremsanlage 1 eines Nutzfahrzeugs mit einem Fußbremswertgeber 2, einem Vorderachs-Vorratsdruckbehälter 4 zur Versorgung eines Vorderachs-Druckkreises oder Vorderachs-Druckkanals, einem Hinterachs-Vorratsdruckbehälter 6 zur Versorgung eines Hinterachs-Druckkreises oder Hinterachs-Druckkanals.

Die Luftbeschaffung, Luftaufbereitung und die Absicherung ist wie gesetzlich vorgeschrieben ausgeführt durch ein hier nicht näher beschriebenes Luftaufbereitungsmodul 8.

Der Hinterachs-Vorratsdruckbehälter 6 ist über pneumatische Versorgungsleitungen 10, 12 einerseits mit einem Hinterachs-Vorratsanschluss 14 eines 2-Kanal-Druckregelmoduls 16 sowie mit einem Vorderachs-Fußbremsventil 18 des Fußbremswertgebers 2 verbunden.

In analoger Weise ist der Vorderachs-Vorratsdruckbehälter 4 über pneumatische Versorgungsleitungen 20, 22 mit einem Vorderachs-Vorratsanschluss 24 des 2-Kanal-Druckregelmoduls 16 sowie mit einem Hinterachs-Fußbremsventil 26 des Fußbremsgebers 2 verbunden.

Der Fußbremswertgeber 2 umfasst daher zwei pneumatisch wirkende Fußbremsventile 18, 26, welche abhängig von einer durch den Fuß des Fahrers vorgegebenen Bremsanforderung jeweils einen pneumatischen Back-up-Druck oder Steuerdruck an den Ausgängen der Fußbremsventile 18, 26 erzeugen. Parallel hierzu sind in dem Fußbremswertgeber 2 in einem elektrischen Kanal 28 zusammengefasst ein elektrischer Vorderachskanal und ein elektrischer Hinterachskanal ausgebildet, welche abhängig von der Bremsanforderung jeweils ein elektrisches Bremsanforderungssignal in eine vorzugsweise als Datenbus 30 ausgebildete elektrische Verbindung zwischen dem Fußbremswertgeber 2 und dem 2-Kanal-Druckregelmodul 16 einsteuert, welches die beiden beispielsweise aus Lastgründen verschiedenen Bremsanforderungssignale für die Vorderachse und die Hinterachse unterscheiden kann.

Weiterhin sind das Vorderachs-Fußbremsventil 18 und das Hinterachs-Fußbremsventil 26 des Fußbremswertgebers 2 jeweils über eine pneumatische Steuerleitung 32, 24 mit zugeordneten Back-up-Anschlüssen 36, 38 des 2-Kanal-Druckregelmoduls 16 verbunden. Schließlich führt jeweils eine pneumatische Bremsleitung 40, 42 von jeweils einem Arbeitsdruckanschluss 44, 46 des 2-Kanal-Druckregelmoduls 16 zu radweisen Bremszuspanneinrichtungen 48, 50 der Vorderachse bzw. der Hinterachse, wobei in diesen pneumatischen Bremsleitungen 40, 42 bevorzugt je Rad ein Drucksteuerventil 52 für den ABS-Betrieb vorgesehen ist. Diese ABS-Drucksteuerventile 52 werden mittels elektrischer Steuerleitungen 54 von dem 2-Kanal-Druckregelmodul 16 angesteuert.

Drehzahlsensoren 56 melden die aktuelle Drehzahl der Räder des Zweiachsfahrzeugs über elektrische Signalleitungen 58 an das 2-Kanal-Druckregelmodul 16. Ebenso sind bevorzugt Verschleißsensoren 60 je Radbremse vorgesehen, welche abhängig vom aktuellen Bremsenverschleiß Signale über elektrische Signalleitungen 62 in das 2-Kanal-Druckregelmodul 16 einsteuern.

Nicht zuletzt ist ein an sich bekanntes Anhängersteuermodul 64 vorgesehen, welches einerseits einen pneumatischen Steuerdruck vom Hinterachs-Fußbremsventil 26 des Fußbremswertgebers 2 und andererseits auch ein elektrisches Signal vom 2-Kanal-Druckregelmodul 16 erhält.

Die Bremszuspanneinrichtungen 50 der Hinterachse sind bevorzugt als bekannte Kombizylinder, d.h. als Kombination eines aktiven Betriebsbremszylinders und eines passiven Federspeicherbremszylinders ausgebildet. "Aktiv" bedeutet in diesem Zusammenhang, dass die Betriebsbremszylinder bei Belüftung zuspannen und bei Entlüftung lösen und "Passiv", dass die Federspeicherbremszylinder bei Entlüftung zuspannen und bei Belüftung lösen. An den Rädern der Vorderachse sind demgegenüber nur aktive Betriebsbremszylinder 48 vorgesehen.

Das als Baueinheit ausgeführte elektro-pneumatische 2-Kanal-Druckregelmodul 16 hat zwei getrennt regelbare Druckregelkanäle, wobei für jeden Druckregelkanal auf der Basis einer von einem zugeordneten Druckluftvorrat (Vorderachs-Druckluftvorrat 4 bzw. Hinterachs-Druckluftvorrat 6) stammenden Arbeitsluft abhängig von den Bremsanforderungssignalen des Fußbremswertgebers 2 ein geregelter, an den zugeordneten Arbeitsdruckanschlüssen 44, 46 anstehender Arbeitsdruck für die Bremszuspanneinrichtungen 48, 50 der Vorderachse bzw. der Hinterachse erzeugt werden.

Zur Ausbildung von pneumatisch kreisgetrennten Druckregelkanälen (beispielsweise hier: Vorderachs-Druckregelkanal bzw. Hinterachs-Druckregelkanal) ist jedem Druckregelkanal folglich ein eigener Druckluftvorrat 4, 6 zugeordnet, wobei die pneumatischen Strömungswege eines jeden Druckregelkanals ausgehend von dem zugeordneten Druckluftvorrat 4, 6 über die zugeordneten Arbeitsdruckanschlüsse 44, 46 bis zu den zugeordneten Bremszuspanneinrichtungen 48, 50 von dem pneumatischen Strömungsweg eines jeweils anderen Druckregelkanals pneumatisch getrennt ausgebildet sind. Insbesondere ist für jeden der Druckregelkanäle (Vorderachs-Druckregelkanal und Hinterachs-Druckregelkanal) ein separater Druckluftvorrat 4, 6 und am 2-Kanal-Druckregelmodul 16 jeweils ein separater Vorratsanschluss 14, 24 zum Anschluss des jeweils zugeordneten Druckluftvorrats 4, 6 vorgesehen wird.

Zur Ausbildung einer elektro-pneumatischen Bremsanlage mit vorrangig elektrisch betätigten Druckregelkanälen (Vorderachs-Druckregelkanal bzw. Hinterachs-Druckregelkanal) und einer nachrangigen pneumatischen Rückfallebene bei einem Ausfall der Elektrik ist jedem Druckregelkanal besonders bevorzugt ein eigener Back-up-Kreis zugeordnet, mit eigenem Back-up-Anschluss 36, 38 am 2-Kanal-Druckregelmodul 16 für die Einsteuerung eines von dem Vorratsdruck des dem jeweiligen Druckregelkreis zugeordneten Druckluftvorrat 4, 6 abgeleiteten und vom Fußbremswertgeber 2 gebildeten pneumatischen Back-up- oder Steuerdrucks, aus welchem bei einem Ausfall von elektrischen Komponenten der Arbeitsdruck an dem Arbeitsdruckanschluss 44, 46 des jeweiligen Druckregelkanals gebildet wird.

Alternativ könnte bei Fahrzeugen, bei denen der Fußbremswertgeber 2 lediglich ein pneumatisches Fußbremsventil aufweist und welche mit dem erfindungsgemäßen 2-Kanal-Druckregelmodul 16 ausgerüstet werden sollen, dieses nur einen einzigen Back-up-Anschluss für die Einsteuerung nur eines vom Fußbremswertgeber 2 erzeugten pneumatischen Back-up-Drucks aufweisen, aus welchem bei einem Ausfall von elektrischen Komponenten mit Hilfe von integrierten Kreistrennungsmitteln separate Arbeitsdrücke an den Arbeitsdruckanschlüssen 44, 46 der Druckregelkanäle gebildet werden. Bei dieser Variante wirkt derselbe Back-up-Druck beispielsweise auf die Relaiskolben der Relaisventile beider Bremskreise. In Ländern mit Bremsenvorschriften nach ECE R13 kann zwischen dem Back-up-Druck oder Steuerdruck des einen Bremskreises und dem aus dem Vorratsdruck des anderen Bremskreises abgeleiteten Arbeitsdruck eine geeignete Kreistrennung beispielsweise durch eine doppelte Kolbendichtung mit Zwischenentlüftung am Relaiskolben vorgesehen werden.

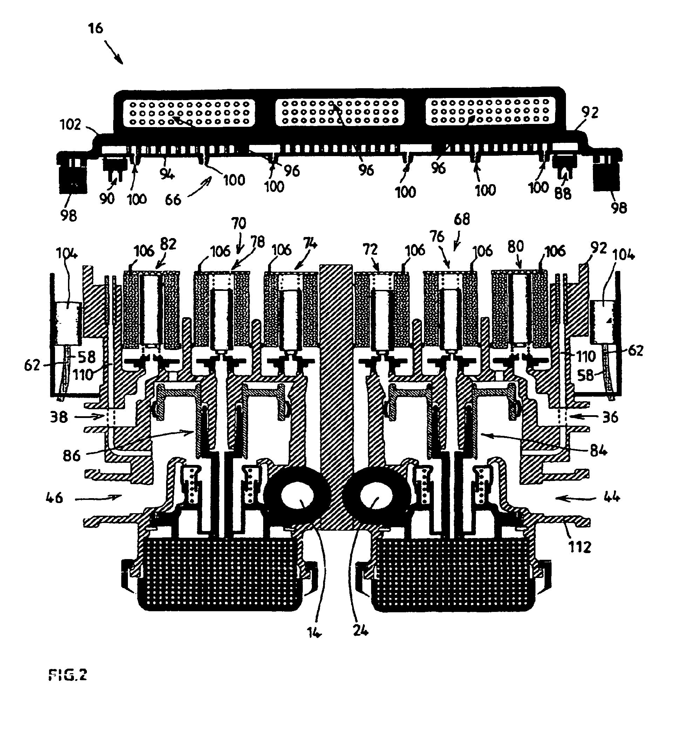

Gemäß Fig.2 beinhaltet ein 2-Kanal-Druckregelmodul 16 bevorzugt eine elektronische Steuereinrichtung 66, welche wenigstens sämtliche für die Druckregelung durch die Druckregelkanäle (Vorderachs-Druckregelkanal bzw. Hinterachs-Druckregelkanal) notwendigen Routinen durchführt und für jeden Druckregelkanal abhängig von den elektrischen Bremsanforderungssignalen des Fußbremswertgebers 2 ein einem Soll-Arbeitsdruck entsprechendes elektrisches Steuersignal erzeugt. Weiterhin ist in dem 2-Kanal-Druckregelmodul 16 für jeden Druckregelkanal (Vorderachs-Druckregelkanal bzw. Hinterachs-Druckregelkanal) eine eigene elektro-magnetbetätigte Ventileinrichtung 68, 70 vorhanden, welche abhängig von den elektrischen Steuersignalen der elektronischen Steuereinrichtung 66 aus dem Vorratsdruck des zugeordneten Druckluftvorrats 4, 6 einen Ist-Arbeitsdruck für den dem jeweiligen Druckregelkanal zugeordneten Arbeitsdruckanschluss 44, 46 erzeugt.

Eine solche elektro-magnetbetätigte Ventileinrichtung 68, 70 beinhaltet bevorzugt jeweils ein Einlassventil 72, 74, ein Auslassventil 76, 78 sowie ein Back-up- oder Rückhalteventil 80, 82. Zur Bewältigung größerer Luftmengen können das Einlassventil 72, 74 und das Auslassventil 76, 78 auch jeweils einen Steueranschluss eines Relaisventils 84, 86 ansteuern, welches dann den Arbeitsdruck erzeugt. Die Arbeitsweise von solchen elektro-magnetbetätigten Ventileinrichtungen 68, 70 ist hinlänglich bekannt, beispielsweise aus der EP 0 845 397 A2, so dass hier nicht weiter darauf eingegangen wird.

Für jeden Druckregelkanal (Vorderachs-Druckregelkanal bzw. Hinterachs-Druckregelkanal) ist weiterhin ein Drucksensor 88, 90 in dem 2-Kanal-Druckregelmodul 16 angeordnet, welcher abhängig von dem von der zugeordneten elektro-magnetbetätigten Ventileinrichtung 68, 70 ausgesteuerten ist-Arbeitsdruck ein Signal in die elektronische Steuereinrichtung 66 zum Vergleich mit dem jeweiligen Soll-Arbeitsdruck einsteuert, zur geregelten Be- und Entlüftung der an den betreffenden Druckregelkanal angeschlossenen Bremszuspanneinrichtungen 48, 50.

Die gemeinsame elektronische Steuereinrichtung 66 regelt dann den Druck in allen Druckregelkanälen(Vorderachs-Druckregelkanal bzw. Hinterachs-Druckregelkanal), mithin sind sämtliche Steuerungs- und Regelungsroutinen bzw. die gesamte Steuerungselektronik die elektrischen Bremskreise betreffend in der elektronischen Steuereinrichtung 66 des 2-Kanal-Druckregelmoduls 16 integriert. Weiterhin sind auch bevorzugt Routinen von Fahrdynamikstabilitätsprogrammen wie ESP (Elektronisches Stabilitäts-Programm), ASR (Antriebsschlupfregelung) und/oder RSP (Roll-over-stability) in der elektronischen Steuereinrichtung 66 implementiert, welche dann auch in die Motorsteuerung eingreifen kann.

Besonders bevorzugt sind daher wenigstens die den Druckregelkanälen (Vorderachs-Druckregelkanal bzw. Hinterachs-Druckregelkanal) zugeordneten elektro-magnetbetätigten Ventileinrichtungen 68, 70, die Drucksensoren 88, 90 sowie die elektronische Steuereinrichtung 66 in einem gemeinsamen Modulgehäuse 92 untergebracht.

Wie aus Fig.2 hervorgeht ist das 2-Kanal-Druckregelmodul 16 bevorzugt so ausgeführt, dass eine Komponenten der elektronischen Steuereinrichtung 66 tragende Platine 94, elektrische Außenkontakte 96 wie Buchsen zur Verbindung der Platine 94 mit einem hier nicht gezeigten Fahrzeugdatenbus, die Drucksensoren 88, 90, mit der Platine 94 verbundene elektrische Steckkontakte 98, 100 in oder an einem beispielsweise als Kopfteil ausgeführten Gehäuseteil 102 angeordnet sind, aber die elektro-magnetbetätigten Ventileinrichtungen 68, 70 mit den elektrischen Steckkontakten 98, 100 des einen Gehäuseteils 102 komplementären elektrischen Steckkontakten 104, 106 sowie mit den dortigen Arbeitsdruckanschlüssen 44, 46 in Verbindung stehenden Druckkanälen 108, 110 in einem weiteren, hier beispielsweise unteren Gehäuseteil 112 angeordnet sind. Die beiden Gehäuseteile 102, 112 sind miteinander lösbar verbunden, wobei bei einer Verbindung der Gehäuseteile 102,112 die einander zugeordneten elektrischen Steckkontakte 98, 104 bzw. 100, 106 miteinander elektrisch sowie die Drucksensoren 88, 90 mit ihrer Druckmessseite einerseits und Mündungen der Druckkanäle 108, 110 andererseits zur Messung des an den Arbeitsdruckanschlüssen 44, 46 anstehenden Ist-Arbeitsdruck durch die Drucksensoren 88, 90 miteinander pneumatisch verbunden werden.

Die Steckkontakte 100 sind bevorzugt an der Platine 94 ausgebildet und fügen sich bei der Montage der Gehäuseteile 102 112 automatisch mit den Steckkontakten 106, welche an den elektromagnet-betätigten Ventilen 72, 74 bzw. 76, 78 bzw. 80, 82 jeweils kopfseitig ausgebildet sind. Dadurch können diese Ventile durch die elektronische Steuereinrichtung 66 bzw. durch deren Platine 94 angesteuert werden. Andererseits geraten dann auch die Steckkontakte 98 und 104 miteinander in leitenden Eingriff, welche radbezogene Signale wie die Raddrehzahl und den Belagverschleiß von den Drehzahlsensoren 56 bzw. den Verschleißsensoren 60 über die Signalleitungen 58, 62 beispielsweise in das untere Gehäuseteil 112 einleiten und dann von dort über die Steckkontakte 98, 104 in die Platine 94 eingesteuert werden, damit die elektronische Steuereinrichtung 66 mit entsprechenden Daten versorgt wird, um die bevorzugt integrierten ESP-, ABS-, ASR-Funktionen sowie eventuell noch weitere Funktionen durchführen zu können.

Alternativ könnten die Drucksensoren 88, 90 auch in dem unteren Gehäuseteil 112 untergebracht sein, in welchem auch die elektro-magnetbetätigten Ventileinrichtungen 68, 70 angeordnet sind, wobei in diesem Fall die pneumatischen Verbindungen zwischen den Arbeitsdruckanschlüssen 44, 46 und den Drucksensoren 88, 90 bereits in dem betreffenden Gehäuseteil 112 ausgebildet sind. Dann sind allerdings zusätzlich bei der Montage der Gehäuseteile 102, 112 in Verbindung bringbare elektrische Kontakte an beiden Gehäuseteilen 102, 112 vorzusehen, damit die Drucksensoren 88, 90 über die dann geschossene elektrische Signalverbindung die den ist-Arbeitsdruck repräsentierenden Signale in die elektronische Steuereinrichtung 66 einsteuern kann.

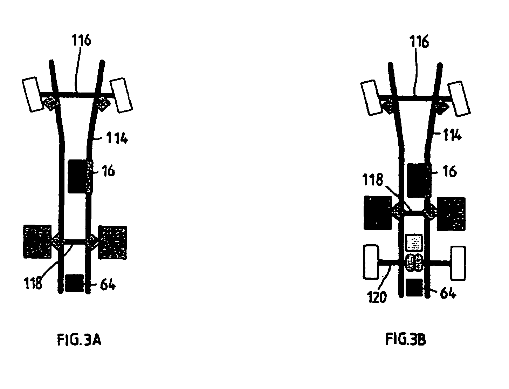

Das erfindungsgemäße 2-Kanal-Druckregelmodul 16 ist bevorzugt an einem Rahmen 114 eines Nutzfahrzeugs, im wesentlichen mittig zwischen der Vorderachse 116 und der Hinterachse 118 angeordnet, wie insbesondere aus Fig.3A hervorgeht.

Bei einer elektro-pneumatischen Bremsanlage eines Fahrzeugs mit einem wie oben beschriebenen 2-Kanal-Druckregelmodul 16 sind daher bevorzugt zwei pneumatisch kreisgetrennte Druckregelkanäle (Vorderachs-Druckregelkanal bzw. Hinterachs-Druckregelkanal) für die Bremszuspanneinrichtungen 48, 50 der Vorderachse 116 und der Hinterachse 118 vorgesehen, wobei für die Bremszuspanneinrichtungen jeder weiteren Achse, beispielsweise einer zweiten Hinterachse oder Liftachse 120 wie in Fig.3B gezeigt, beispielsweise ein weiteres, hier beispielsweise einkanaliges Druckregelmodul 122 vorgesehen werden kann, dessen elektronische Steuereinrichtung dann über einen Datenbus mit der elektronischen Steuereinrichtung 66 des 2-Kanal-Druckregelmoduls 16 kommuniziert.

Anstatt einer Vorderachse 116 und einer Hinterachse 118 kann bei dem 2-Kanal-Druckregelmodul 16 ein pneumatisch kreisgetrennter Druckregelkanal wenigstens einer Hinterachse und ein pneumatisch kreisgetrennter Druckregelkanal wenigstens einer weiteren Hinterachse zugeordnet sein. Das erfindungsgemäße Druckregelmodul 16 ist auch nicht auf zwei Kanäle beschränkt, sondern kann mehr als zwei Kanäle aufweisen.

Im Normalbetrieb wird das 2-Kanal-Druckregelmodul 16 über den Datenbus 30 von dem elektrischen Kanal 28 des Fußbremswertgebers 2 durch ein Bremsanforderungssignal angesteuert, woraufhin dessen elektronische Steuereinrichtung 66 entsprechend dieser Vorgabe für die Druckregelkanäle der Vorderachse 116 und der Hinterachse 118 einen Arbeits- oder Bremsdruck auf der Basis des jeweiligen Vorratsdrucks in dem jeweiligen Druckluftvorrat 4, 6 zu den Bremszylindern 48, 50 steuern. Die pneumatischen Fußbremsventile 18, 26 des Fußbremswertgebers 2 steuern ebenfalls Back-up- oder Steuerdrücke für jeden Druckregelkanal (Vorderachs-Druckregelkanal bzw. Hinterachs-Druckregelkanal) getrennt in die beiden Back-up-Anschlüsse 36, 38 des 2-Kanal-Druckregelmoduls 16 ein, wobei die dortigen Back-up- oder Rückhalteventile 80, 82 in Sperrstellung geschaltet sind, weil die elektrische Ansteuerung Vorrang hat.

Bei einem Ausfall der Elektronik wird über die beiden Back-up-Bremskreise, d.h. über die beiden Fußbremsventile 18, 26 und die beiden pneumatischen Steuerleitungen 32, 34 Druckluft aus den beiden Druckluftvorräten 4, 6 über die in dem 2-Kanal-Druckregelmodul 16 nun durchgeschalteten Back-up- oder Rückhalteventile 80, 82 in die Bremszylinder 48, 50 eingesteuert. Diese beiden Back-up-Bremskreise bilden dann den Rückhalt für die elektronische Regelung und reichen aus, die gesetzlich vorgeschriebene Hilfsbremswirkung zu erzeugen.

### Bezugszeichenliste

| | |
|---|---|
| 1 | Betriebsbremsanlage |
| 2 | Fußbremswertgeber |
| 4 | VA-Vorratsdruckbehälter |
| 6 | HA-Vorratsdruckbehälter |
| 8 | Luftaufbereitungsmodul |
| 10 | Versorgungsleitung |
| 12 | Versorgungsleitung |
| 14 | HA-Vorratsanschluss |
| 16 | 2-Kanal-Druckregelmodul |
| 18 | VA-Fußbremsventil |
| 20 | Versorgungsleitung |
| 22 | Versorgungsleitung |
| 24 | VA-Vorratsanschluss |
| 26 | HA-Fußbremsventil |
| 28 | elektrischer Kanal |
| 30 | Datenbus |
| 32 | Steuerleitung |
| 34 | Steuerleitung |
| 36 | Back-up-Anschluss |
| 38 | Back-up-Anschluss |
| 40 | Bremsleitung |
| 42 | Bremsleitung |
| 44 | Arbeitsdruckanschluss |
| 46 | Arbeitsdruckanschluss |
| 48 | Bremszuspanneinrichtung VA |
| 50 | Bremszuspanneinrichtung HA |
| 52 | Drucksteuerventil |
| 54 | elektrische Steuerleitung |
| 56 | Drehzahlsensoren |
| 58 | elektrische Signalleitungen |
| 60 | Verschleißsensoren |
| 62 | elektrische Signalleitungen |
| 64 | Anhängersteuermodul |
| 66 | elektronische Steuereinrichtung |
| 68 | Ventileinrichtung |
| 70 | Ventileinrichtung |
| 72 | Einlassventil |
| 74 | Einlassventil |
| 76 | Auslassventil |
| 78 | Auslassventil |
| 80 | Back-up-Ventil |
| 82 | Back-up-Ventil |
| 84 | Relaisventil |
| 86 | Relaisventil |
| 88 | Drucksensor |
| 90 | Drucksensor |
| 92 | Modulgehäuse |
| 94 | Platine |
| 96 | Außenkontakte |
| 98 | Steckkontakte |
| 100 | Steckkontakte |
| 102 | Gehäuseteil |
| 104 | Steckkontakte |
| 106 | Steckkontakte |
| 108 | Druckkanal |
| 110 | Druckkanal |
| 112 | Gehäuseteil |
| 114 | Rahmen |
| 116 | Vorderachse |
| 118 | Hinterachse |
| 120 | Liftachse |
| 122 | Druckregelmodul |

## Patentansprüche

1. Elektro-pneumatische Bremsanlage eines Fahrzeugs beinhaltend wenigstens ein als Baueinheit ausgeführtes elektro-pneumatisches Druckregelmodul (16) mit wenigstens zwei getrennt regelbaren Druckregelkanälen, wobei für jeden Druckregelkanal auf der Basis einer von wenigstens einem Druckluftvorrat (4, 6) stammenden Arbeitsluft abhängig von Bremsanforderungssignalen eines Bremswertgebers (2) ein geregelter, an wenigstens einem Arbeitsdruckanschluss (44, 46) anstehender Arbeitsdruck für wenigstens einen Betriebsbremszylinder (48, 50) der Bremsanlage erzeugt wird, **dadurch gekennzeichnet, dass**
a) zur Ausbildung von pneumatisch kreisgetrennten Druckregelkanälen jedem Druckregelkanal wenigstens ein eigener, an einen eigenen Druckluftvorrat (4, 6) angeschlossener Vorratsdruckanschluss (14, 24) zugeordnet ist, wobei
b) die pneumatischen Strömungswege eines jeden Druckregelkanals zumindest ausgehend von dem jeweiligen Vorratsdruckanschluss (14, 24) bis zu dem jeweiligen Arbeitsdruckanschluss (44, 46) von den pneumatischen Strömungswegen eines jeweils anderen Druckregelkanals pneumatisch getrennt ausgebildet sind.

2. Bremsanlage nach Anspruch 1, **dadurch gekennzeichnet, dass** bei dem Druckregelmodul (16) ein Arbeitsdruckanschluss (44) zum Anschluss wenigstens eines Betriebsbremszylinders (50) einer Achse (118) und wenigstens ein weiterer Arbeitsdruckanschluss (46) zum Anschluss eines Betriebsbremszylinders (48) wenigstens einer weiteren Achse (116) des Fahrzeugs vorgesehen ist.

3. Bremsanlage nach einem der vorhergehenden Ansprüche, **dadurch gekennzeichnet, dass** jedem Druckregelkanal ein eigener Back-up-Kreis zugeordnet ist, mit eigenem Back-up-Anschluss (36, 38) für die Einsteuerung eines von dem Vorratsdruck des dem jeweiligen Druckregelkreis zugeordneten Druckluftvorrat (4, 6) abgeleiteten und vom Bremswertgeber (2) gebildeten pneumatischen Backup-Drucks, aus welchem bei einem Ausfall von elektrischen Komponenten der Arbeitsdruck an dem Arbeitsdruckanschluss (44, 46) des jeweiligen Druckregelkanals gebildet wird.

4. Bremsanlage nach Anspruch 3, **dadurch gekennzeichnet, dass** die pneumatischen Strömungswege eines jeden Backup-Kreises zumindest ausgehend von dem zugeordneten Back-up-Anschluss (36, 38) bis zu dem zugeordneten Arbeitsdruckanschluss (44, 46) von den pneumatischen Strömungswegen eines jeweils anderen Back-up-Kreises pneumatisch getrennt ausgebildet sind.

5. Bremsanlage nach Anspruch 1 oder 2, **dadurch gekennzeichnet, dass** sie einen einzigen Back-up-Anschluss für die Einsteuerung eines vom Bremswertgeber (2) erzeugten pneumatischen Backup-Drucks aufweist, aus welchem bei einem Ausfall von elektrischen Komponenten mit Hilfe von integrierten Kreistrennungsmitteln separate Arbeitsdrücke an den Arbeitsdruckanschlüssen (44, 46) der Druckregelkanäle gebildet werden.

6. Bremsanlage nach einem der vorhergehenden Ansprüche, **dadurch gekennzeichnet, dass** das Druckregelmodul (16) wenigstens folgendes beinhaltet:
a) eine elektronische Steuereinrichtung (66), welche sämtliche für die Druckregelung durch die Druckregelkanäle notwendigen Routinen durchführt und für jeden Druckregelkanal abhängig von elektrischen Bremsanforderungssignalen des Bremswertgebers (2) ein einem Soll-Arbeitsdruck entsprechendes elektrisches Steuersignal erzeugt,
b) für jeden Druckregelkanal eine eigene elektro-magnetbetätigte Ventileinrichtung (68, 70), welche abhängig von den elektrischen Steuersignalen der elektronischen Steuereinrichtung (66) aus dem Vorratsdruck des zugeordneten Druckluftvorrats (4, 6) einen Ist-Arbeitsdruck für den dem jeweiligen Druckregelkanal zugeordneten Arbeitsdruckanschluss (44, 46) erzeugt,
c) für jeden Druckregelkanal wenigstens einen Drucksensor (88, 90), welcher abhängig von dem von der zugeordneten elektro-magnetbetätigten Ventileinrichtung (68, 70) ausgesteuerten Ist-Arbeitsdruck ein Signal in die elektronische Steuereinrichtung (66) zum Vergleich mit dem jeweiligen Soll-Arbeitsdruck einsteuert, zur geregelten Be- und Entlüftung des wenigstens einen, an den betreffenden Druckregelkanal angeschlossenen Betriebsbremszylinders (48, 50).

7. Bremsanlage nach Anspruch 6, **dadurch gekennzeichnet, dass** bei dem Druckregelmodul (16) eine gemeinsame elektronische Steuereinrichtung (66) den Druck in den Druckregelkanälen regelt.

8. Bremsanlage nach Anspruch 6 oder 7, **dadurch gekennzeichnet, dass** bei dem Druckregelmodul (16) wenigstens die den Druckregelkanälen zugeordneten elektro-magnetbetätigten Ventileinrichtungen (68, 70), die Drucksensoren (88, 90) sowie die elektronische Steuereinrichtung (66) in einem gemeinsamen Modulgehäuse (92) untergebracht sind.

9. Bremsanlage nach Anspruch 8, **dadurch gekennzeichnet, dass**
a) eine Komponenten der elektronischen Steuereinrichtung (66) tragende Platine (94), elektrische Außenkontakte (96) zur Verbindung der Platine (94) mit externen Geräten, die Drucksensoren (88, 90), mit der Platine (94) verbundene elektrische Kontakte (98, 100) in oder an einem Gehäuseteil (102) angeordnet sind, während
b) die elektro-magnetbetätigten Ventileinrichtungen (68, 70), den elektrischen Kontakten (98, 100) des einen Gehäuseteils (102) zugeordnete elektrische Kontakte (104, 106) sowie mit den Arbeitsdruckanschlüssen (44, 46) in Verbindung stehende Druckkanäle (108, 110) in einem weiteren Gehäuseteil (112) angeordnet sind, wobei
c) die beiden Gehäuseteile (102, 112) miteinander lösbar verbunden sind und bei einer Verbindung der beiden Gehäuseteile (102, 112) die einander zugeordneten elektrischen Kontakte (98, 104 bzw. 100, 106) elektrisch sowie die Drucksensoren (88, 90) und Mündungen der Druckkanäle (108, 110) pneumatisch miteinander verbunden werden.

10. Bremsanlage nach einem der vorhergehenden Ansprüche, **dadurch gekennzeichnet, dass** bei dem Druckregelmodul (16)
a) ein pneumatisch kreisgetrennter Druckregelkanal wenigstens einer Vorderachse (16) und ein pneumatisch kreisgetrennter Druckregelkanal wenigstens einer Hinterachse (118),
b) ein pneumatisch kreisgetrennter Druckregelkanal wenigstens einer Hinterachse und ein pneumatisch kreisgetrennter Druckregelkanal wenigstens einer weiteren Hinterachse zugeordnet ist.

11. Bremsanlage nach einem der vorhergehenden Ansprüche, **dadurch gekennzeichnet**, das das Druckregelmodul (16) ein 2-Kanal-Druckregelmodul ist und zwei pneumatisch kreisgetrennte Druckregelkanäle für die Betriebsbremszylinder (48, 50) zweier Achsen (116, 118) aufweist.

12. Bremsanlage nach Anspruch 11, **dadurch gekennzeichnet, dass** für Betriebsbremszylinder jeder weiteren Achse (120) wenigstens ein weiteres Druckregelmodul (122) vorgesehen ist, dessen elektronische Steuereinrichtung mit der elektronischen Steuereinrichtung (66) des 2-Kanal-Druckregelmoduls (16) kommuniziert.

13. Bremsanlage nach Anspruch 11 oder 12, **dadurch gekennzeichnet, dass** das 2-Kanal-Druckregelmodul (16) an einem Rahmen (114) des Fahrzeugs, im wesentlichen mittig zwischen den Achsen (116, 118) angeordnet ist, deren Betriebsbremszylinder (48, 50) an die betreffenden Arbeitsandruckschlüsse (44, 46) des 2-Kanal-Druckregelmoduls (16) angeschlossen sind.

14. Bremsanlage nach einem der Ansprüche 11 bis 13, **dadurch gekennzeichnet, dass** den Arbeitsdruckanschlüssen (44, 46) des 2-Kanal-Druckregelmoduls (16) und den Betriebsbremszylindern (48, 50) von der elektronischen Steuereinrichtung (66) des 2-Kanal-Druckregelmoduls (16) gesteuerte Drucksteuerventile (52) zwischengeordnet sind.

## Claims

1. Electropneumatic braking system of a vehicle, comprising an electropneumatic pressure regulating module (16) designed as an assembly and comprising at least two separately controllable pressure regulating channels, wherein a regulated working pressure, acting on at least one working pressure port (44, 46), for at least one service brake cylinder (48, 50) of the brake system is generated for each pressure regulating channel on the basis of working air originating from at least one compressed air store (4, 6) and as a function of braking demand signals of a brake transducer (2), **characterised in that**
a) to form pressure regulating channels having separate pneumatic circuits, each pressure regulating channel is assigned at least one dedicated storage pressure port (14, 24) connected to a dedicated compressed air store (4, 6), wherein
b) the pneumatic flow paths of each pressure regulating channel are designed so as to be pneumatically separate, at least proceeding from the respective storage pressure port (14, 24) as far as the respective working pressure port (44, 46), from the pneumatic flow paths of a respective other pressure regulating channel.

2. Braking system according to claim 1, **characterised in that** a working pressure port (44) for connecting at least one service brake cylinder (50) of one axle (118) and at least one further working pressure port (46) for connecting a service brake cylinder (48) of at least one further axle (116) of the vehicle are provided.

3. Braking system according to any of the preceding claims, **characterised in that** each pressure regulating channel is assigned a dedicated backup circuit, having a dedicated backup port (36, 38) for the introduction of a pneumatic backup pressure which is derived from the storage pressure of the compressed air store (4, 6) assigned to the respective pressure regulating circuit and which is formed by the brake transducer (2), from which backup pressure the working pressure at the working pressure port (44, 46) of the respective pressure regulating channel is formed in the event of a failure of electric components.

4. Braking system according to claim 3, **characterised in that** the pneumatic flow paths of each backup circuit are designed so as to be pneumatically separate, at least proceeding from the associated backup port (36, 38) as far as the associated working pressure port (44, 46), from the pneumatic flow paths of a respective other backup circuit.

5. Braking system according to claim 1 or 2, **characterised in that** it has a single backup port for the introduction of a pneumatic backup pressure generated by the brake transducer (2), from which backup pressure separate working pressures are formed at the working pressure ports (44, 46) of the pressure regulating channels by means of integrated circuit separation means in the event of a failure of electric components.

6. Braking system according to any of the preceding claims, **characterised in that** the pressure regulating module (16) comprises at least the following:
a) an electronic control device (66) which executes all the routines necessary for the pressure regulation by the pressure regulating channels and which generates for each pressure regulating channel an electric control signal corresponding to a set working pressure as a function of electric braking demand signals of the brake transducer (2),
b) for each pressure regulating channel, a dedicated solenoid-actuated valve device (68, 70) which, as a function of the electric control signals of the electronic control device (66), generates from the storage pressure of the associated compressed air store (4, 6) an actual working pressure for the working pressure port (44, 46) assigned to the respective pressure regulating channel,
c) for each pressure regulating channel, at least one pressure sensor (88, 90) which, as a function of the actual working pressure output by the associated solenoid-actuated valve device (68, 70), inputs a signal into the electronic control device (66) for comparison with the respective set working pressure, for the regulated ventilation and venting of the at least one service brake cylinder (48, 50) connected to the relevant pressure regulating channel.

7. Braking system according to claim 6, **characterised in that** in the pressure regulating module (16) a common electronic control device (66) regulates the pressure in the pressure regulating channels.

8. Braking system according to claim 6 or 7, **characterised in that** in the pressure regulating module (16) at least the electromagnetically actuated valve devices (68, 70) assigned to the pressure regulating channels, the pressure sensors (88, 90) and the electronic control device (66) are accommodated in a common module housing (92).

9. Braking system according to claim 8, **characterised in that**
a) a printed circuit board (94) which carries components of the electronic control device (66), electric external contacts (96) for connecting the printed circuit board (94) to external units, the pressure sensors (88, 90) and electric contacts (98, 100) connected to the printed circuit board (94) are arranged in or on a housing part (102), whereas
b) the solenoid-actuated valve devices (68, 70), electric contacts (104, 106) assigned to the electric contacts (98, 100) of one housing part (102) and pressure channels (108, 110) connected to the working pressure ports (44, 46) are arranged in a further housing part (112), wherein
c) the two housing parts (102, 112) are detachably connected to one another and, when the two housing parts (102, 112) are connected, the electric contacts (98, 104 and 100, 106) assigned to one another are electrically connected to one another, and the pressure sensors (88, 90) and openings of the pressure channels (108, 110) are pneumatically connected to one another.

10. Braking system according to any of the preceding claims, **characterised in that** in the pressure regulating module (16)
a) a pressure regulating channel having a separate pneumatic circuit is assigned to at least one front axle (16), and a pressure regulating channel having a separate pneumatic circuit is assigned to at least one rear axle (118),
b) a pressure regulating channel having a separate pneumatic circuit is assigned to at least one rear axle, and a pressure regulating channel having a separate pneumatic circuit is assigned to at least one further rear axle.

11. Braking system according to any of the preceding claims, **characterised in that** the pressure regulating module (16) is a 2-channel pressure regulating module and has two pressure regulating channels, having separate pneumatic circuits, for the service brake cylinders (48, 50) of two axles (116, 118).

12. Braking system according to claim 11, **characterised in that**, for the service brake cylinders of each further axle (120), at least one further pressure regulating module (122) is provided, the electronic control device of which communicates with the electronic control device (66) of the 2-channel pressure regulating module (16).

13. Braking system according to claim 11 or 12, **characterised in that** the 2-channel pressure regulating module (16) is arranged on a frame (114) of the vehicle, substantially centrally between the axles (116, 118) whose service brake cylinders (48, 50) are connected to the respective working pressure ports (44, 46) of the 2-channel pressure regulating module (16).

14. Braking system according to any of claims 11 to 13, **characterised in that** pressure control valves (52) controlled by the electronic control device (66) of the 2-channel pressure regulating module (16) are interposed between the working pressure ports (44, 46) of the 2-channel pressure regulating module (16) and the service brake cylinders (48, 50)

## Revendications

1. Système de freinage électropneumatique d'un véhicule, comprenant au moins un module régulateur de pression électropneumatique (16) conçu sous forme d'une unité de structure, à au moins deux canaux de réglage de pression réglables de façon séparée l'un de l'autre, dans lequel une pression de travail réglée appliquée à au moins une entrée de pression de travail (44, 46) pour au moins un cylindre de frein de service (48, 50) du système de freinage est engendrée pour chaque canal de réglage sur la base d un air de travail provenant d'au moins un réservoir de l'air comprimé (4, 6) en fonction, **caractérisée en ce**
a) **qu'**au moins une entrée de pression d'alimentation séparée (14, 24) est affectée à chaque canal de réglage de pression, qui est reliée à un réservoir de l'air comprimé (4, 6) séparé, pour la formation des canaux de réglage de pression sur circuits séparés de façon pneumatique, dans lequel
b) les voies d'écoulement pneumatiques de chaque canal de réglage de pression sont formées à séparation pneumatique par les voies d'écoulement pneumatiques d'un autre canal de réglage de pression respective, au moins à partir de l'entrée de pression d'alimentation respective (14, 24) jusqu'à l'entrée de pression de travail respective (44, 46).

2. Système de freinage selon la revendication 1, **caractérisée en ce qu'**une entrée de pression de travail (44) dans ledit module régulateur de pression (16) est prévue pour le raccord d'au moins un cylindre de frein de service (50) d'un essieu (118) et **en ce qu'**au moins une autre entrée de pression de travail (46) est prévue pour le raccord d'un cylindre de frein de service (48) d'au moins un autre essieu (116) du véhicule.

3. Système de freinage selon une quelconque des revendications précédentes, **caractérisée en ce qu'**un circuit de secours séparé est affecté à chaque canal de réglage de pression, à une entrée de secours séparée (36, 38) pour le pilotage d'une pression de secours pneumatique dérivée de la pression d'alimentation dudit réservoir de l'air comprimé (4, 6) affecté au circuit de réglage de pression respectif et engendrée par ledit générateur de valeur de freinage (2), à partir duquel la pression de travail est engendrée à ladite entrée de pression de travail (44, 46) du canal de réglage de pression respectif au cas de défaillance des composants électriques.

4. Système de freinage selon la revendication 3, **caractérisée en ce que** lesdites voies d'écoulement pneumatique de chaque circuit de secours sont formées à séparation pneumatique par les voies d'écoulement pneumatiques d'un autre circuit de secours respectif, au moins à partir de l'entrée de secours affectée (36, 38) jusqu'à 'l'entrée de pression de travail affectée (44, 46).

5. Système de freinage selon la revendication 1 ou 2, **caractérisée en ce qu'**il comprend une seule entrée de secours pour le pilotage d'une pression de secours pneumatique engendrée par ledit générateur de valeur de freinage (2), à partir de laquelle des pressions de travail séparées sont engendrées auxdites entrées de pression de travail (44, 46) desdits canaux de réglage de pression moyennant des moyens séparateurs de circuits intégrés au cas de défaillance des composants électriques.

6. Système de freinage selon une quelconque des revendications précédentes, **caractérisée en ce que** ledit module régulateur de pression (16) comprend au moins les composants suivants:
a) un moyen de commande électronique (66), qui réalise toutes les routines nécessaires pour le réglage de pression par lesdits canaux de réglage de pression, et qui engendre un signal de commande électrique correspondant à une pression de travail de consigne pour chaque canal de réglage de pression en fonction des signaux de demande de freinage électriques dudit générateur de valeur de freinage (2),
b) un moyen de soupape séparé (68, 70) commandé par voie électromagnétique pour chaque canal de réglage de pression, qui, en fonction desdits signaux de commande électrique dudit moyen de commande électronique (66), engendre une pression de travail réelle à partir de la pression d'alimentation du réservoir de l'air comprimé affecté (4, 6) pour l'entrée de pression de travail affectée au canal de réglage de pression respectif,
c) pour chaque canal de réglage de pression au moins un détecteur de pression (88, 90), qui, en fonction de la pression de travail réelle pilotée par ledit moyen de soupape commandé par voie électromagnétique affecté, pilote un signal dans ledit moyen de commande électronique (66) pour la comparaison avec la pression de travail de consigne respective, pour l'aération et ventilation réglée dudit au moins un cylindre de frein de service (48, 50) raccordé au canal de réglage de pression respectif

7. Système de freinage selon la revendication 6, **caractérisée en ce qu'**un moyen de commande électronique (66) commun audit module régulateur de pression (16) règle la pression dans lesdits canaux de réglage de pression.

8. Système de freinage la revendication 6 ou 7, **caractérisée en ce qu'**au moins lesdits moyens de soupape commandés par voie électromagnétique (68, 70) audit module régulateur de pression (16), qui sont affectés auxdits canaux de réglage de pression, lesdits détecteurs de pression (88, 90) ainsi que ledit moyen de commande électronique (66) sont rangés dans un carter de module commun (92).

9. Système de freinage selon la revendication 8, caractérisée en ce
a) qu'une platine (94) portant des composants dudit moyen de commande électronique, des contacts électriques extérieurs (96) pour le raccord de ladite platine (94) aux dispositifs extérieurs, lesdits détecteurs de pression (88, 90), des contacts électriques (98, 100) reliés à ladite platine (94) sont disposés dans ou à une partie dudit carter (102), pendant que
b) lesdits moyens à soupape commandés par voie électromagnétique (68, 70), des contacts électriques (104" 106) affectés aux contacts électriques (98, 100) de ladite première partie de carter (102), ainsi que des canaux de pression (108, 110) en communication avec lesdites entrées de pression de travail (44, 46) sont disposés dans une autre partie de carter (112), dans lequel
c) lesdites deux parties de carter (102, 112) sont connectées l'une à l'autre de manière détachable et dans lequel au cas d'une connexion desdites deux parties de carter (102, 112) lesdits contacts électriques affectés l'un à l'autre sont reliés l'un à l'autre par voie électrique pendant que lesdits détecteurs de pression (88, 90) et les orifices desdits canaux de pression (108, 110) sont raccordés l'un à l'autre par voie pneumatique.

10. Système de freinage selon une quelconque des revendications précédentes, **caractérisée en ce qu'**audit module régulateur de pression (16)
a) un canal de réglage à séparation pneumatique de circuits est affecté à au moins un essieu avant (16) et un canal de réglage à séparation pneumatique de circuits est affecté à au moins un essieu arrière (118),
b) un canal de réglage de pression à séparation pneumatique de circuits est affecté à au moins un essieu arrière et un canal de réglage de pression à séparation pneumatique de circuits este affecté à au moins un autre essieu arrière.

11. Système de freinage selon une quelconque des revendications précédentes, **caractérisée en ce que** ledit module régulateur de pression (16) est un module régulateur de pression à deux voies et comprend deux canaux de réglage de pression à séparation pneumatique de circuits pour les cylindres de frein de service (48, 50) de deux essieux (116, 118).

12. Système de freinage selon la revendication 11, **caractérisée en ce qu'**au moins un autre module régulateur de pression (122) est disposé pour des cylindres de frein de service de chaque autre essieu (120), dont ledit moyen de commande électronique se trouve en communication avec ledit moyen de commande électronique (66) dudit module régulateur de pression à deux voies (16).

13. Système de freinage selon la revendication 11 ou 12, **caractérisée en ce que** ledit module régulateur de pression à deux voies (16) est disposé à un cadre (114) du véhicule, essentielle centralement entre lesdits essieux (116, 118), dont lesdits cylindres de frein de service (48, 50) sont raccordés aux entrées de pression de travail respectives (44, 46) dudit module régulateur de pression à deux voies (16).

14. Système de freinage selon une quelconque des revendications 11 à 13, **caractérisée en ce que** des soupapes de commande de pression (52), qui sont pilotés par ledit moyen de commande électronique (6) dudit module régulateur de pression à deux voies (16), sont interposés entre lesdites entrées de pression de travail (44, 46) dudit module régulateur de pression à deux voies (16) et lesdits cylindres de frein de service (48, 50).
